(19) Europäisches Patentamt
European Patent Office
Office européen des brevets

(11) **EP 2 267 066 A1**

(12) **EUROPEAN PATENT APPLICATION**
published in accordance with Art. 153(4) EPC

(43) Date of publication:
**29.12.2010 Bulletin 2010/52**

(51) Int Cl.:
*C08J 9/232* (2006.01)    *A01G 5/04* (2006.01)
*A47G 7/03* (2006.01)    *B29C 67/20* (2006.01)
*C08J 9/12* (2006.01)

(21) Application number: **09725648.1**

(22) Date of filing: **12.03.2009**

(86) International application number:
**PCT/JP2009/054735**

(87) International publication number:
**WO 2009/119325 (01.10.2009 Gazette 2009/40)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: 27.03.2008  JP 2008083244
27.03.2008  JP 2008083245
19.08.2008  JP 2008210718
17.11.2008  JP 2008293365
17.11.2008  JP 2008293366
17.11.2008  JP 2008293368

(71) Applicant: **Kaneka Corporation**
**Kita-ku**
**Osaka-shi, Osaka 530-8288 (JP)**

(72) Inventors:
• FURUKAWA, Tomonori
  Settsu-shi
  Osaka 566-0072 (JP)
• MIYAGAWA, Toshio
  Settsu-shi
  Osaka 566-0072 (JP)
• SHINOBU, Masahide
  Settsu-shi
  Osaka 566-0072 (JP)
• FUKUNAGA, Shinichi
  Settsu-shi
  Osaka 566-0072 (JP)

(74) Representative: **Vossius & Partner**
**Siebertstrasse 4**
**81675 München (DE)**

(54) **ALIPHATIC POLYESTER RESIN FOAM, FLOWER ARRANGEMENT HOLDER MADE OF THE FOAM, AND PROCESSES FOR PRODUCTION OF BOTH**

(57)    Provided are an aliphatic polyester resin foam which has a compressive stress equal to or below that of 50-fold expanded polystyrol foam and which exhibits excellent degradability and excellent shock absorption performance, a biodegradable flower arrangement holder which has not only such low compression strength as to permit arbitrary insertion of flowers but also supporting power and which is excellent in water permeability and water-holding capacity, and processes for production of both. Aliphatic polyester resin expansion moldings which are produced from expanded aliphatic polyester resin particles and which have weight-average molecular weights of 5000 to 140000 and expansion ratios of 10 or above.

**Description**

TECHNICAL FIELD

The present invention relates to an aliphatic polyester resin expansion molding that is easily degradable and yet has excellent shock absorption performance, a flower arrangement holder made of the expansion molding that is used for support of plants, for example, in flower arrangement by using cut flower plants, Western-style flower arrangement, modern flower art and fresh flower decoration in ceremonial occasions, and a process for production thereof.

BACKGROUND ART

Generally, shock absorption performance (compressive stress) of an expansion molding depends on its expansion ratio, and thus, an expansion molding having a higher expansion ratio shows a smaller compressive stress. In the case of polystyrol foams, it is easy to obtain an expansion molding having a desired compressive stress, because the resins can be expanded to an expansion ratio of more than 50 without addition of any special additive and there is no particular problem in moldability.

On the other hand, polylactic acid resins, which are resins obtained by polymerization of lactic acid that is prepared by lactic acid fermentation of a natural product starch, are attracting attention, because these resins can be produced with smaller consumption of petroleum resource and they are biodegradable resins that are easily decomposed by natural microbes and yet have favorable mechanical properties at room temperature. Thus for application as a polystyrol foam alternative, development of expandable particles of such a polylactic acid resin and moldings thereof has been in progress. For example, Patent Documents 1 and 2 disclose polylactic acid resins crosslinked and higher in viscosity so that they can be molded in conventional preliminary foaming machines and molding machines for polystyrol foams. These resins obtain strain hardenability needed for favorable foaming, but only at the expense of elongation of the resins, and it is thus difficult to obtain expanded particles having an expansion ratio of more than 50 and the expandable particles, even if obtained, have narrower flexibility of the molding condition, demanding some improvement for obtaining favorable molded articles. Under the circumstances above, there exists a demand for an aliphatic polyester resin expansion molding, such as polylactic acid resin, having a low compressive stress equal to that of 50-fold or more expanded polystyrol foams.

Flower arrangement by using cut flower plants and others has been practiced popularly, traditionally in Japan, and such plants have been used not only in individual houses, but also, for example for decoration of the interior of the places for ceremonial occasions and commercial shops, such as restaurants, and also of the front halls of modern construction buildings. Western flower arrangement and modern flower art, for example, have become more popular recently, in addition to the traditional flower arrangement.

Various sorts of acts of arranging cut flowers, other plants and the like artificially, as described above, will be referred to as flower arrangement in the present description. Metal pin holders have traditionally been used, as the holders in the flower arrangement for supporting and fixing the cut flowers, other plants and the like, in the traditional art of flower arrangement in Japan and the pin holders are mainly used even now.

However, the angle and the height of the flowers supported and fixed by the pin holder are restricted and thus, freedom of artificial expression is restricted, when it is used, and for that reason, pin holders are disadvantageous in convenience. Thus, Patent Document 3, for example, discloses a holder of a phenol resin foam, so-called a phenol foam holder, as the holder that can be used more easily and artificially in wide ranges of applications, and such flower arrangement holders have been used widely in Europe and the U.S. and also in Japan.

These phenol foam holders are lighter, have a high degree of freedom in processing and expression, and can be used easily, but the phenol foams, which are made of a thermosetting resin, cannot be regenerated (recycled) and may generate bisphenol, a suspected endocrine disruptor, when discharged.

Alternatively, Patent Document 4 discloses a biologically degradable foam that is prepared by adding a biodegradable component as secondary component to a phenol foam component. However, even such a biological degradable foam cannot avoid the problem of endocrine disruptor, as far as it contains a phenol component, and there is a concern about accelerated diffusion of the phenol component into soil by decomposition.

For the reasons above, there also exists a need for a flower arrangement holder made of an environmentally-friendly biodegradable plastic resin. The polylactate-based expansion moldings developed by the inventors mainly as an alternate of polystyrol foams allowed production of moldings in complicated shape and higher in thickness, similarly to polystyrol foams, but had a high rate of closed cells, prohibiting use of them, as they are, in flower arrangement holder (Patent Documents 1 and 2).

Alternatively, Patent Document 5 or 6 discloses a flower arrangement holder prepared by using an open-cell foam of a biodegradable resin.

In Patent Document 5, an open-cell foam containing cellulose acetate as the principal component is prepared, and the foaming agents exemplified therein include "dinitrosopentamethylenetetramine (DPT); azodicarbonamide (ADCA); p-toluenesulfonyl hydrazine (TSH); P,P'-oxybisbenzenesulfonyl hydrazine (OBSH); sodium bicarbonate; volatile substances such as pentane; water and others", but as a matter of fact, only a method of adding an acetone solution of cellulose acetate into water is used in the Patent Document. It is not possible to obtain a uniform foam by such a method and thus, it is unlikely that a foam having high expansion ratio, such as the foam described in Patent Document 5, can be obtained.

Patent Document 6 discloses open-cell foams prepared by removing skin layer from foams obtained by extrusion of polycaprolactone, cellulose acetate, modified starch, polylactic acid or the like. In the Examples therein, an open-cell foam expanded at an expansion ratio of 40 to 50 was prepared in an extrusion-foaming machine by using a blend of 100 wt parts of a resin such as polylactic acid and 100 wt parts of calcium carbonate, but normally, blending of such an inorganic material in a great amount often leads to inhibition of foaming.

In addition, the foaming agent used in all Examples was diphenylmethane diisocyanate (MDI), except when water was used as a foaming agent for modified starch. Water is essential during foaming with MDI, but hydrolysis of polylactic acid progresses in the presence of water. It is thus not possible to obtain a open-cell foam sheet having a high expansion ratio, as described in the literature, and it is only possible to obtain a foam having an expansion ratio at most of about 2.

Alternatively, Patent Document 6 describes that the flower arrangement holder has a compression breaking strength of 0.3 MPa or less and an initial compression elastic modulus of 0.5 MPa or more in the saturated water-containing state, because it should satisfy the need for expression of antinomic functions of allowing easy insertion into the stalks of cut flowers or the like and preventing shaking or dislocation thereof by vibration or wind and thus fixing the cut flowers or the like. When surface layer is removed, foam cells are anisotropic in the internal layer of an extrusion foam and thus, the foam cannot be used arbitrarily from any direction, and may not show particular properties, if cut into small pieces.

Patent Document 1: WO 99/021915
Patent Document 2: JP-A No. 2005-068306
Patent Document 3: JP-A No. 9-75193
Patent Document 4: JP-A No. 8-53564
Patent Document 5: JP-A No. 2000-333802
Patent Document 6: JP-A No. 2000-217683

SUMMARY OF THE INVENTION

TECHNICAL PROBLEMS TO BE SOLVED

An object of the present invention is to provide an aliphatic polyester resin foam which has a compressive stress equal to or less than that of 50-fold expanded polystyrol foam and which exhibits excellent degradability and excellent shock absorption performance and a process of producing the same.

Another object of the present invention is a biodegradable flower arrangement holder which has not only such low compression strength as to permit arbitrary insertion of flowers but also supporting power and which is excellent in water permeability and water-holding capacity, and in addition, which permits arbitrary insertion of flowers from any direction, and a process of producing the same.

MEANS TO SOLVE THE PROBLEMS

After intensive studies to solve the problems above, the inventors have found that it was possible to obtain an aliphatic polyester resin foam which has a low compressive stress equal to that of 50-fold or more expanded polystyrol foam and which exhibits excellent degradability and excellent shock absorption performance, by wet heat-treatment of a foam under particular temperature and humidity conditions, even if it is a foam of an aliphatic polyester resin, such as polylactic acid resin, having low expansion ratio and a compressive stress higher than 50-fold polystyrol foam.

They also found that it was possible to obtain a flower arrangement holder which has not only such low compression strength as to permit arbitrary insertion of flowers from any direction but also supporting power and which is excellent in water permeability and water-holding capacity, by hydrolyzing an aliphatic polyester resin expansion molding under suitable condition and breaking down the weakened walls of the foam cells by pressurization.

Thus, the present invention relates to the followings:

(1) An aliphatic polyester resin foam, having a weight-average molecular weight of 5000 or more and 140000 or less and an expansion ratio of 10 or more.

(2) The aliphatic polyester resin foam according to (1), wherein the aliphatic polyester resin foam is obtained from expanded aliphatic polyester resin particles.

(3) The aliphatic polyester resin foam according to (1) or (2), wherein the aliphatic polyester resin is a polylactic acid resin.

(4) The aliphatic polyester resin foam according to (3), having a weight-average molecular weight of 10000 or more and 140000 or less and an expansion ratio of 10 or more.

(5) The aliphatic polyester resin foam according to any one of (1) to (4), having an expansion ratio of 10 or more and 60 or less.

(6) The aliphatic polyester resin foam according to (5), having an expansion ratio of 10 or more and 40 or less.

(7) The aliphatic polyester resin foam according to any one of (1) to (6), having a 10% compressive stress of 0.02 MPa or more and 0.15 MPa or less.

(8) A method of producing the aliphatic polyester resin foam according to any one of (1) to (7), characterized in that the aliphatic polyester resin foam is obtained by treating an aliphatic polyester resin expansion molding in the atmosphere at a temperature of 60°C or higher and 100°C or lower and a relative humidity of 60% or more and 100% or less.

(9) The method of producing the aliphatic polyester resin foam according to (8), comprising preparing an aliphatic polyester resin expansion molding by in-mold foaming of expanded aliphatic polyester resin particles and treating the aliphatic polyester resin expansion molding in the atmosphere at a temperature of 60°C or higher and 100°C or lower and a relative humidity of 60% or more and 100% or less.

(10) The method of producing the aliphatic polyester resin foam according to (9), comprising preparing an aliphatic polyester resin expansion molding by in-mold foaming of expanded aliphatic polyester resin particles and treating the aliphatic polyester resin expansion molding in the atmosphere at a temperature of 60°C or higher and 100°C or lower and a relative humidity of 80% or more and 100% or less.

(11) The method of producing the aliphatic polyester resin foam according to (9) or (10), wherein the treatment is carried out for 3 hours or more and 72 hours or less.

(12) The method of producing the aliphatic polyester resin foam according to (11), wherein the treatment is carried out for 3 hours or more and 48 hours or less.

(13) A flower arrangement holder, comprising an aliphatic polyester resin expansion molding obtained by in-mold foaming of expanded aliphatic polyester resin particles and having a 10% compressive stress of 0.02 MPa or more and 0.15 MPa or less, a compression modulus of 0.40 MPa or more and 2.00 MPa or less, a 10% compressive stress ratio, as determined on faces perpendicular to each other, of 0.9 or more and 1.1 or less, and a compression modulus ratio, as determined on faces perpendicular to each other, of 0.9 or more and 1.1 or less.

(14) A flower arrangement holder, comprising an aliphatic polyester resin expansion molding obtained by extrusion foaming of an aliphatic polyester resin and having a 10% compressive stress of 0.02 MPa or more and 0.15 MPa or less and a compression modulus of 0.48 MPa or more and 1.20 MPa or less.

(15) The flower arrangement holder according to (13) or (14), wherein the aliphatic polyester resin is a polylactic acid resin.

(16) The flower arrangement holder according to any one of (13) to (15), having a weight-average molecular weight of 5000 or more and 140000 or less, an expansion ratio of 10 or more and 60 or less, and a closed-cell rate of 0% or more and 50% or less.

(17) The flower arrangement holder according to (16), having a weight-average molecular weight of 10000 or more and 140000 or less, an expansion ratio of 10 or more and 60 or less, and a closed-cell rate of 0% or more and 50% or less.

(18) The flower arrangement holder according to (17), having a weight-average molecular weight of 60000 or more and 140000 or less, an expansion ratio of 10 or more and 40 or less, and a closed-cell rate of 0% or more and 50% or less.

(19) A method of producing the flower arrangement holder according to (13) or (15), comprising preparing an aliphatic polyester resin expansion molding by in-mold foaming of expanded aliphatic polyester resin particles and hydrolyzing the aliphatic polyester resin expansion molding.

(20) The method of producing the flower arrangement holder according to (19), characterized by comprising preparing an aliphatic polyester resin expansion molding by in-mold foaming of expanded aliphatic polyester resin particles, hydrolyzing the aliphatic polyester resin expansion molding and pressing the aliphatic polyester resin expansion molding.

(21) A method of producing the flower arrangement holder according to (14) or (15), comprising hydrolyzing the aliphatic polyester resin expansion molding obtained by extrusion foaming of the aliphatic polyester resin.

(22) The method of producing the flower arrangement holder according to (21), comprising hydrolyzing the aliphatic polyester resin expansion molding obtained by extrusion foaming of the aliphatic polyester resin and additionally pressing the resulting aliphatic polyester resin expansion molding.

(23) The method of producing the flower arrangement holder according to any one of (19) to (22), wherein the hydrolytic treatment is carried out under the condition of a temperature of 60°C or higher and 100°C or lower and a relative humidity of 60% or more.

(24) The method of producing the flower arrangement holder according to (20), wherein the pressurization is carried out by using an inorganic gas.

(25) The method of producing the flower arrangement holder according to (20), wherein the pressurization is carried out in the presence of water or an aqueous solution.

EFFECT OF THE INVENTION

The aliphatic polyester resin foam according to the present invention has a compressive stress equal to or less than that of 50-fold or more expanded polystyrol foam and exhibits excellent degradability and excellent shock absorption performance.

In addition, it is easily possible, by the method of producing an aliphatic polyester resin foam according to the present invention, to provide an aliphatic polyester resin foam which has a compressive stress equal to or less than that of 50-fold or more expanded polystyrol foam and which exhibits excellent degradability and excellent shock absorption performance, by treating the expansion molding obtained by in-mold foaming of expanded particles under particular temperature and humidity conditions.

The flower arrangement holder according to the present invention is biodegradable and excellent in water permeability and water-holding capacity and has a 10% compressive stress and a compression modulus, as determined on the face perpendicular to any face, respectively of 0.9 or more and 1.1 or less, and thus, allows insertion thereof into and support of flowers arbitrarily from any direction.

The flower arrangement holder according to the present invention is biodegradable and excellent in water permeability and water-holding capacity. In addition, it has a 10% compressive stress of 0.02 MPa or more and 0.15 MPa or less and a compression modulus of 0.48 MPa or more and 1.20 MPa or less, thus allowing arbitrary insertion thereof into flowers.

By the process of producing a flower arrangement holder according to the present invention, it is possible to obtain a flower arrangement holder easily by hydrolysis of an aliphatic polyester resin expansion molding obtained by extrusion-foaming of an aliphatic polyester resin or an aliphatic polyester resin expansion molding obtained by in-mold-foaming of expanded aliphatic polyester resin particles.

BEST MODE FOR CARRYING OUT THE INVENTION

The aliphatic polyester resin foam according to the present invention has a weight-average molecular weight of 5000 or more and 140000 or less and an expansion ratio of 10 or more. Preferably, the aliphatic polyester resin foam is prepared from expanded aliphatic polyester resin particles. The weight-average molecular weight of the aliphatic polyester resin foam is preferably 10000 or more and 140000 or less, more preferably 30000 or more and 100000 or less. The expansion ratio of the aliphatic polyester resin foam is preferably 10 or more and 60 or less, more preferably 10 or more and 40 or less.

The weight-average molecular weight of the aliphatic polyester resin foam is determined by heating the aliphatic polyester resin foam in chloroform at 40°C in a hot water bath for 2.5 hours, filtering the soluble matter through a disposable PTFE filter having a pore diameter of 0.45 $\mu$m, and analyzing the filtrate by GPC measurement under the following condition:

GPC measurement apparatus: RI Monitor (L-3300), manufactured by Hitachi, Ltd.
Column: columns K-G and two columns K-806L, manufactured by Showa Denko K.K.
Sample concentration: 3 mg/ml
Eluant: chloroform solution
Eluant flow rate: 1.0 ml/minute,
Sample injection volume: 100 $\mu$L
Analytical period: 30 minutes
Standard samples: standard polystyrols

The expansion ratio of the aliphatic polyester resin foam is calculated from the volume, weight and resin density of the foam. Specifically, the volume ($V$ ($cm^3$)) of an aliphatic polyester resin foam cut into a rectangular shape of suitable size is calculated from the external sizes. The expansion ratio of the foam is calculated from the weight of foam $W$ (g), the volume of foam $V$ ($cm^3$) and the resin density $p$ ($g/cm^3$), according to the following Formula:

$$\text{Expansion ratio} = V / (W/\rho)$$

In the present invention, when the weight-average molecular weight is 5000 or more and 140000 or less in the phase of expandable particle or expanded particle, it may not be possible to obtain sufficient melt tension during preliminary foaming or in-mold foaming and thus, not possible to produce expanded particles favorable in moldability and a foam favorable in appearance. For that reason, it is preferable to adjust the weight-average molecular weight of the aliphatic polyester resin foam according to the present invention, by preparing expanded aliphatic polyester resin particles by using an aliphatic polyester resin, converting the expanded aliphatic polyester resin particles into an aliphatic polyester resin expansion molding by in-mold foaming, and treating the resulting expansion molding in the atmosphere at a particular temperature and a particular humidity.

The aliphatic polyester resin, as used in the present invention, is a polymer containing, in an amount of at least 35 mol % or more, an aliphatic polyester, which is, for example, at least one polymer selected from the group consisting of polylactic acid resins containing polylactic acid as major component, hydroxy acid polycondensates such as poly3-(hydroxybutyrate), poly3-(hydroxybutyrate-co-valerate) and poly3-(hydroxybutyrate-co-hexanoate), lactone ring-opening polymers such as polycaprolactone, and polycondensates from an aliphatic polyvalent alcohol and an aliphatic carboxylic acid such as polybutylene succinate, polybutylene adipate, polybutylene succinate adipate and poly(butyleneadipatelterephthalate).

Examples of the aliphatic hydroxycarboxylic acids include glycolic acid, hydroxybutyric acid, hydroxyvaleric acid, hydroxycaproic acid, hydroxyheptanoic acid and the like. Examples of the aliphatic polyvalent carboxylic acids include succinic acid, adipic acid, suberic acid, sebacic acid, dodecanedicarboxylic acid, succinic anhydride, adipic anhydride, trimesic acid, propanetricarboxylic acid, pyromellitic acid, pyromellitic anhydride and the like. Examples of the aliphatic polyvalent alcohols include ethylene glycol, 1,4-butanediol, 1,6-hexanediol, 1,4-cyclohexanedimethanol, neopentylglycol, decamethylene glycol, glycerol, trimethylolpropane, pentaerythritol and the like.

Other resins may be added to the aliphatic polyester resin for use as the base resin in the range that does not impair the advantageous effects of the present invention. The aliphatic polyester resin is desirably contained in the base resin in an amount of 50 wt % or more, more preferably 70 wt % or more and still more preferably 90 wt % or more. Examples of the other resins include polyethylene resins, polypropylene resins, polystyrol resins, polyester resins, acrylic resins, vinyl resins, polyurethane resins, phenol resins, other aliphatic polyester resins and the like.

Among the aliphatic polyester resins above, a polylactic acid resin is preferably used as the aliphatic polyester resin for obtaining the advantageous effects of the present invention. The polylactic acid resin is not particularly limited, but preferably a polymer containing a polylactic acid, in which the isomer ratio of the lactic acid components is preferably 5% or more, more preferably 8% or more, as the principal component, because a polymer higher in crystallinity often makes foaming and in-mold foaming difficult by crystallization. In addition, part of the monomers for the polylactic acid resin may be replaced with an aliphatic hydroxycarboxylic acid, an aliphatic polyvalent carboxylic acid, an aliphatic polyvalent alcohol or the like exchangeable with lactic acid, and the polylactic acid resin may be partly crosslinked, for example, with an epoxidized soy bean oil or an epoxidized flax seed oil.

When a polylactic acid resin is used as the aliphatic polyester resin, it is preferably to increase the viscosity of the polylactic acid resin from the viewpoints of expandability and moldability. It tends to be possible by the viscosity-increasing treatment to raise the viscosity of the polylactic acid resin to a degree suitable for foaming. Various known methods are included in the methods used for viscosity-increasing treatment, and examples thereof include methods of using at least one crosslinking agent selected from polyisocyanate compounds, peroxides, acid anhydrides, epoxy compounds and the like, electron beam-crosslinking methods, silane-crosslinking methods and the like, but the method of using a crosslinking agent is preferable from the point of easiness in operation.

Examples of the polyisocyanate compounds include aromatic polyisocyanate compounds, alicyclic polyisocyanate compounds, aliphatic polyisocyanate compounds and the like.

Examples of the aromatic polyisocyanate compounds include polyisocyanate compounds having tolylene, diphenylmethane, naphthylene or triphenylmethane as the skeleton. Examples of the alicyclic polyisocyanate compounds include polyisocyanate compounds having isophorone or hydroxydiphenylmethane as the skeleton. Examples of the aliphatic polyisocyanate compounds include polyisocyanate compounds having hexamethylene or lysine as the skeleton.

Examples of the peroxides include organic peroxides such as benzoyl peroxide, bis(butylperoxy)trimethylcyclohexane, bis(butylperoxy)cyclododecane, butyl bis(butylperoxy)valerate, dicumyl peroxide, butyl peroxybenzoate, dibutyl peroxide, bis(butylperoxy)diisopropylbenzene, dimethyldi(butylperoxy)hexane, and dimethyldi(butylperoxy)hexyne and butylperoxycumene.

Examples of the acid anhydrides include trimellitic anhydride, pyromellitic anhydride, ethylene-maleic anhydride copolymers, methyl vinylether-maleic anhydride copolymers, styrene-maleic anhydride copolymers and the like.

Examples of the epoxy compounds include various glycidyl ethers such as glycidyl methacrylate-methyl methacrylate copolymers, glycidyl methacrylate-styrene copolymers, glycidyl methacrylate-styrene-butyl acrylate copolymers, polyethylene glycol diglycidyl ether, trimethylolpropane polyglycidyl ethers, palm fatty acid glycidyl esters, epoxidized soy bean oils and epoxidized flaxseed oils; various glycidyl esters and the like.

A polyisocyanate compound is preferably used among the crosslinking agents above. It is because, when a polyisocyanate compound is used, it is possible to suppress the increase of torque by viscosity increase caused by crosslinking during kneading and to increase the viscosity of the blend, for example due to formation of urea bonds, urethane bonds, allophanate bonds by post treatment, specifically by heating the blend in the presence of water after kneading. Among the polyisocyanate compounds above, aromatic polyisocyanate compounds are used favorably, and polyisocyanate compounds having a tolylene or diphenylmethane skeleton, in particular diphenylmethane-based polyisocyanates, are used favorably, from the viewpoints of flexibility in use, handling efficiency, weather resistance and others.

The addition amount of the crosslinking agent can be determined according to the crosslinking agent used, in such a manner that desired melting properties are obtained. The amount may vary according to the kind of the crosslinking agent used and the amount of the functional groups therein, but is preferably 0.1 wt part or more and 6.0 wt parts or less, more preferably 0.2 wt part or more and 5.0 wt parts or less, and still more preferably 0.5 wt part or more and 4.0 wt parts or less, with respect to 100 wt parts of the polylactic acid resin.

For example when an aromatic polyisocyanate compound having a functional group number of 2 to 3 is used to a polylactic acid resin having a weight-average molecular weight of about 200,000 and a polydispersity of about 2 to 2.5, the content is preferably 0.1 wt part or more and 5 wt parts or less, more preferably 0.2 wt part or more and 4 wt parts or less and still more preferably 1.5 wt parts or more and 3.5 wt parts or less with respect to 100 wt parts of the polylactic acid resin.

When a polylactic acid resin is used as the aliphatic polyester resin in the present invention, the weight-average molecular weight of the polylactic acid resin foam is preferably 5000 or more and 140000 or less, more preferably 10000 or more and 140000 or less, and still more preferably 60000 or more and 140000 or less. When the weight-average molecular weight of the polylactic acid resin foam is in the range above and the expansion ratio is preferably 10 or more, more preferably 10 or more and 60 or less, still more preferably 10 or more and 40 or less, it tends to be possible to obtain easily a compressive stress equal to or less than that of an expanded polystyrol foam at a foaming ratio of 50 or more.

The polylactic acid resin above is preferably a high-molecular weight polylactic acid resin having a melt viscosity, i.e., a melt index (MI), as determined according to JIS K7210 (load: 2.16 kg), of 0.1 g/10 minutes or more and 10 g/10 minutes or less. A polylactic acid resin having a MI value in the range above tends to be superior in productivity and give an expansion molding higher in expansion ratio, and thus, satisfies the object and effect of the present invention easily. The melt viscosity can be determined at a measurement temperature of 190°C and an orifice diameter of 2 mm.

In the present invention, colorants, foam-adjusting agents and various additives may be added to the aliphatic polyester resin, as needed.

Examples of the colorants include colorants of black, gray, brown, blue, green and others. It is possible to obtain colored expanded particles and expansion moldings, by using a colored base resin. The colorant may be an organic pigment or dye, an inorganic pigment or dye, or the like. Known pigments and dyes can be used as the pigments and dyes.

The addition amount of the colorant may vary according to the kind of the colorant used, but is normally, preferably 0.001 wt part or more and 5 wt parts or less, more preferably 0.02 wt part or more and 3 wt parts or less, with respect to 100 wt parts of the aliphatic polyester resin.

Examples of the foam-adjusting agents include inorganic materials such as talc, calcium carbonate, borax, zinc borate, aluminum hydroxide and calcium stearate, and these compounds may be added in advance. Alternatively, traditionally known additives such as flame retardants, antistatic agents and anti-weathering agents may be added additionally to the aliphatic polyester resin in the range that does not impair the advantageous effects of the present invention.

If a colorant, a foam-adjusting agent or another additive is added to a base aliphatic polyester resin, it may be kneaded as it is with the base resin, but it is normally, preferable to prepare a master batch of the additive and knead the additive in the form of master batch with the base resin, in view of dispersion efficiency.

The aliphatic polyester resin foam according to the present invention is preferably produced by treating an aliphatic polyester resin expansion molding in the atmosphere at 60°C or higher and 100°C or lower and a relative humidity of 60% or more and 100% or less. More preferably, the aliphatic polyester resin foam is produced by forming an aliphatic polyester resin expansion molding by in-mold foaming of expanded aliphatic polyester resin particles and treating the expansion molding in the atmosphere at 60°C or higher and 100°C or lower and a relative humidity of 60% or more and 100% or less.

The expanded aliphatic polyester resin particles can be produced, for example, by the following traditionally known methods of (A) to (D).

Expanded aliphatic polyester resin particles are prepared from an aliphatic polyester resin, for example, by:

(A) a method of preparing aliphatic polyester resin particles from an aliphatic polyester resin, preparing expandable aliphatic polyester resin particles by impregnating a foaming agent into the aliphatic polyester resin particles, and heat-foaming the expandable aliphatic polyester resin particles with steam, hot air, high-frequency wave or the like;

(B) a method of foaming aliphatic polyester resin particles by preparing aliphatic polyester resin particles from an aliphatic polyester resin, dispersing the aliphatic polyester resin particles in a dispersion medium in a tightly-sealed container in the presence of a foaming agent and softening the aliphatic polyester resin particles by heating the content, allowing impregnation of the foaming agent into the aliphatic polyester resin particles, and then discharging the aliphatic polyester resin particles and the dispersion medium out of the tightly-sealed container into an atmosphere at lower pressure (normally, lower than atmospheric pressure) by opening one terminal of the tightly-sealed container while retaining the pressure in the tightly-sealed container at a pressure higher than the vapor pressure of the foaming agent;

(C) a method of producing expanded particles by melting a base resin as needed with additives and others added in an extruder, kneading it with a foaming agent into an expandable melt-kneaded mixture, foaming the mixture as it is extruded into the strand shape, and cutting the strands to a suitable length before or after cooling;

(D) a method of preparing an expandable melt-kneaded mixture by melting a base resin, a crosslinking agent and other additives and kneading the mixture with a foaming agent in an extruder, preparing expandable aliphatic polyester resin particles by extruding the mixture out and cutting the extrudate to a suitable length, heat-foaming the expandable aliphatic polyester resin particles with steam, hot air, high-frequency wave or the like; or the like.

Among the methods above, methods (A) and (D) are preferable from the possibility of transportation of the expandable particles, and method (A) is particularly preferable from the point of flexibility of the production apparatus.

In method (A), aliphatic polyester resin particles are prepared before production of expanded aliphatic polyester resin particles. The aliphatic polyester resin particles can be produced by a known method, and, for example in the case of a polylactic acid resin, the particles are produced by melt-extruding a polylactic acid resin with a crosslinking agent and as needed other additives in an extruder and extruding it into strands and cutting the strands for example with an underwater cutter or a strand cutter. The weight of an aliphatic polyester resin particle is preferably 0.05 mg or more and 10 mg or less, more preferably 0.1 mg or more and 4 mg or less. Particles having a particle weight in the range above tend to be favorable in productivity of the resin particles and also in injection efficiency during in-mold foam molding.

The particles are preferably particles having a largest diameter /smallest diameter ratio of preferably 1.0 or more and 1.4 or less, more preferably 1.0 or more and 1.2 or less, and most preferably, the particles are spherical particles having a ratio of 1.0. When the particles are more spherical in shape, injection efficiency of the expanded particles during in-mold preparation of an expansion molding is likely improved, and expanded particles likely fuse and bind to each other, giving an expansion molding favorable in appearance, if the conditions such as heating condition are optimised.

Then, expandable aliphatic polyester resin particles are obtained by impregnating a foaming agent into the aliphatic polyester resin particles. The method of impregnating a foaming agent into the aliphatic polyester resin particles is not particularly limited, if the condition of the sufficiently high pressure applied in the presence of a foaming agent giving desired foamability is satisfied. It is possible to impregnate a foaming agent into the aliphatic polyester resin particles, for example, by placing an aqueous medium or a nonaqueous medium in a tightly-sealed container, adding aliphatic polyester resin particles and a foaming agent thereto and stirring the mixture at a suitable temperature for a suitable period. If the impregnation is carried out in an aqueous medium, it is preferable to taka a measure to inhibit hydrolysis and carry out impregnation for a shortened period, when vulnerability of the aliphatic polyester resin to hydrolytic reaction is considered.

During the impregnation with a foaming agent, an impregnation assistant, a dispersant or the like may be used for stabilized impregnation efficiency and foamability. Examples of the impregnation assistants include protonic solvent represented by alcohols such as methanol, ethanol, and propanol; non-protonic solvents represented by ketones such as acetone and methylethylketone, esters such as ethyl acetate, butyl acetate, and n-propyl acetate, and aromatic hydrocarbons such as toluene and xylene, but, if impregnation is made in an aqueous medium, a non-protonic solvent, which does not cause hydrolysis of the aliphatic polyester resin, is used favorably. The dispersant is a cationic surfactant, an anionic surfactant, a nonionic surfactant or the like.

If impregnation is made in an aqueous medium, a water-soluble salt, specifically a monovalent metal salt such as sodium chloride, sodium sulfate, sodium carbonate, potassium chloride, potassium sulfate, or potassium carbonate, a bivalent metal salt such as magnesium chloride or magnesium sulfate, or a trivalent metal salt such as aluminum sulfate is added favorably for suppression of penetration of water. The amount of the water-soluble salt added for suppression of penetration of water into the resin is preferably 5 wt parts or more and 20 wt parts or less, more preferably 7.5 wt parts or more and 20 wt parts or less, with respect to 100 wt parts of the aqueous medium. An addition amount of less than 5 wt parts may result in insufficient impregnation of the foaming agent, while an addition amount of more than 20 wt parts may result in decreased impregnation of the foaming agent.

The foaming agent for use is not particularly limited, and any known foaming agent may be used, and examples thereof include hydrocarbon-based foaming agents such as propane, isobutane, n-butane, isohexane, n-hexane, cyclobutane, cyclohexane, isopentane, n-pentane, and cyclopentane; halogenated hydrocarbon-based foaming agents such as methyl chloride, methylene chloride, and dichlorodifluoromethane; ether-based foaming agents such as dimethylether and methylethylether; inorganic foaming agents such as nitrogen, carbon dioxide, argon, and air; and the like, and at least one of these foaming agents can be used. Among the foaming agents above, hydrocarbon-based foaming agents are used more favorably, and hydrocarbon-based foaming agents having a carbon number of 3 or more and 6 or less are used still more favorably, because gas release from the aliphatic polyester resin is smaller, the expandable particles can be conveyed, and desired foamability can be obtained.

The amount of the foaming agent to be impregnated may be adjusted according to the kind of the foaming agent and the desired expansion ratio but, for example for obtaining expanded particles having an expansion ratio of 30 or more, the expandable particles are preferably used in an amount of 4 wt parts or more, with respect to 100 wt parts of the constituting base resin.

Alternatively in production of expandable aliphatic polyester resin particles in an extruder as by the method (D), for example when a polylactic acid resin is used as the aliphatic polyester resin, the expandable particles can be obtained by supplying a polylactic acid resin, a crosslinking agent, and, as needed, other additives into the extruder, melt-extruding the mixture with a foaming agent added later, extruding the resulting blend, and cutting the extruded strands of the blend.

Expanded aliphatic polyester resin particles can be prepared by heat-foaming the expandable aliphatic polyester resin particles thus obtained, for example, with steam, hot air, or high-frequency wave. For example if the resin is heated with steam, normally, heating is carried out at a foaming oven temperature of preferably 60˚C or higher and 100˚C or lower, more preferably 70˚C or higher and 95˚C or lower.

In-mold foaming of the expanded aliphatic polyester resin particles thus obtained gives an aliphatic polyester resin expansion molding. The in-mold foaming is normally carried out in a molding machine used in molding of polystyrol foams or a molding machine used in in-mold foaming of expanded polyolefin resin particles, normally at a steam pressure of preferably 0.03 MPa(G) or more and 0.3 MPa(G) or less, more preferably 0.05 MPa(G) or more and 0.15 MPa(G) or less. Pressurized injection and compression injection methods commonly practiced in in-mold foaming may be used and, if the secondary foaming force is lower during in-mold foaming, an inorganic gas such as air, nitrogen or carbon dioxide may be added to the expanded aliphatic polyester resin particles. For improvement of fusion between the expandable particles within the aliphatic polyester resin expansion molding, the in-mold foaming may be carried out by using a steam lower in heat capacity, such as a mixture of steam and air.

The aliphatic polyester resin expansion molding thus obtained, which may possibly achieves the object of the present application as it is, may be used as the aliphatic polyester resin foam according to the present invention, but the aliphatic polyester resin expansion molding obtained is preferably treated in the atmosphere at a particular temperature and a particular humidity. The treatment temperature is preferably 60˚C or higher and 100˚C or lower, more preferably 70˚C or higher and 90˚C or lower. The treatment humidity is preferably 60% or more and 100% or less, more preferably 80% or more and 100% or less, as relative humidity, and an aliphatic polyester resin foam having a desired compressive stress tends to be obtained by treatment at the relative humidity above for a suitable period. The temperature may be higher than 100˚C, but the treatment is preferably carried out normally at a temperature of 100˚C or lower, because there are cases where a pressure-withstanding facility is needed and where the treatment is hardly controlled because of excessively high speed.

The period of the treatment under the condition at the temperature and humidity above is preferably 3 hours or more and 72 hours or less, more preferably 3 hours or more and 48 hours or less. It is likely in the treatment period above to obtain a homogeneous aliphatic polyester resin foam having a desired compressive stress.

The treatment condition may be adjusted according to the base resin used, the expansion ratio, and others but, for example when a polylactic acid resin is used as the aliphatic polyester resin, the melt viscosity of the polylactic acid resin expansion molding, i.e., melt index (MI), as determined according to JIS K7210 (load: 2.16 kg), is preferably 0.1 g/10 minutes or more and 0.5 g/10 10 minutes or less.

For example when a compressive stress equal to that of an polystyrol foam having an expansion ratio of 50 is desirably obtained by using a polylactic acid resin expansion molding having an expansion ratio of 40, the object can be achieved, for example, by treatment at 80˚C and a relative humidity of 100% for 3 hours or more to 6 hours or less. The treatment method is not particularly limited, if the desired temperature and humidity are obtained by the method. In addition, a trace amount of alkali component may be added to the resin and the resin may be subjected to hydrolytic treatment by the alkali vapor for shortening the treatment period.

Alternatively, the aliphatic polyester resin expansion molding can be hydrolyzed in a short period of time, by adding an alkali vapor, an alkali component or the like to the process of producing aliphatic polyester resin particles, aliphatic polyester resin expandable particles, or an aliphatic polyester resin expansion molding.

The 10% compressive stress of the aliphatic polyester resin foam according to the present invention thus obtained is preferably 0.02 MPa or more and 0.15 MPa or less, more preferably 0.03 MPa or more and 0.12 MPa or less. If it is in the range above, the resin foam can be said to have a compressive stress equal to or less than that of an expanded polystyrol foam having an expansion ratio of 50 or more. The 10% compressive stress is determined according to the method specified by JIS K7220.

Applications of the aliphatic polyester resin foam according to the present invention are not particularly limited, but, for example, include those in which polystyrol resin foams are used, such as cushioning materials, planting media, shock absorbers, shoe last materials and others.

A first embodiment of the flower arrangement holder according to the present invention is an aliphatic polyester resin expansion molding obtained by in-mold foaming of expanded aliphatic polyester resin particles containing an aliphatic polyester resin as the base resin

The first flower arrangement holder according to the present invention has a 10% compressive stress of 0.02 MPa or more and 0.15 MPa or less, a compression modulus of 0.40 MPa or more and 2.00 MPa or less, a ratio of 10% compressive stress, as determined at any directions perpendicular to each other, of 0.9 or more and 1.1 or less, and a ratio of compression modulus, as determined at any directions perpendicular to each other, of 0.9 or more and 1.1 or less.

The first flower arrangement holder according to the present invention has a 10% compressive stress of 0.02 MPa or more and 0.15 MPa or less, preferably 0.04 MPa or more and 0.12 MPa or less. A 10% compressive stress of less than 0.02 MPa leads to easy insertion, but harder fixation of flower stem. On the other hand, a 10% compressive stress of more than 0.15 MPa leads to easy fixation but difficult insertion of flower stem.

The ratio of 10% compressive stress, as determined at any directions perpendicular to each other, is 0.9 or more and 1.1 or less, preferably 0.95 or more and 1.05 or less. When the ratio is in the range above, the foam is almost not anisotropic and thus, it is easy to insert flower stems freely from any direction under the same force. The 10% compressive stress is determined by the method specified in JIS K7220.

The compression modulus of the first flower arrangement holder according to the present invention is 0.40 MPa or more and 2.00 MPa or less, preferably 0.40 MPa or more and 1.70 MPa or less. A compression modulus of less than 0.40 MPa leads to easy insertion, but difficult fixation of flower stem. Alternatively, a compression modulus of more than 2.00 MPa leads to easy fixation, but difficult insertion of flower stem.

The ratio of compression modulus, as determined at any directions perpendicular to each other, is 0.9 or more and 1.1 or less, preferably 0.95 or more and 1.05 or less. If the ratio is in the range above, the foam is almost not anisotropic, and it is possible to insert flower stems freely from any direction under the same force easily and fix the flower stems, as they are inserted. The compression modulus is a value determined from the slope of the tangent line to the early-stage peak in the compressive stress-strain curve by the measurement, as determined in a test machine similar to that used for compressive stress measurement.

The method of producing the first flower arrangement holder according to the present invention is characterized in that an aliphatic polyester resin expansion molding is formed by in-mold foaming of expanded aliphatic polyester resin particles containing an aliphatic polyester resin as the base resin and the flower arrangement holder is obtained by hydrolysis of the aliphatic polyester resin expansion molding.

Examples of the methods of producing the expanded aliphatic polyester resin particles and the aliphatic polyester resin expansion molding are, for example, those for production of the expanded aliphatic polyester resin particles and the aliphatic polyester resin expansion molding described above.

The aliphatic polyester resin foam thus obtained may be used as the first flower arrangement holder according to the present invention, as it is, but may be eliminated by machining on the surface region for improvement in appearance of the surface of the expansion molding.

The aliphatic polyester resin expansion molding thus obtained can be used as the first flower arrangement holder according to the present invention as it is, but it is preferably hydrolyzed for further improvement in physical properties, and more preferably, the aliphatic polyester resin expansion molding is prepared by in-mold foaming of expanded aliphatic polyester resin particles and the aliphatic polyester resin expansion molding is hydrolyzed and then pressurized.

The hydrolytic treatment is not particularly limited, if it is a method leading to progress of uniform hydrolysis, but it is preferable to use steam or a thermo-hygrostat higher in penetration force to aliphatic polyester resins and more preferable to use a thermo-hygrostat from the viewpoints of uniformity of treatment and easiness of control. When the hydrolytic treatment is carried out in a thermo-hygrostat, the aliphatic polyester resin expansion molding is preferably conditioned under the condition at a temperature of 60˚C or higher and 100˚C or lower and a relative humidity of 60% or more; more preferably under the condition at a temperature of 60˚C or higher and 100˚C or lower and a relative humidity of 60% or more and 100% or less; still more preferably under the condition at a temperature of 60˚C or higher and 100˚C or lower and a relative humidity of 80% or more and 100% or less.

It tends to be possible to obtain a flower arrangement holder having a desired compressive stress by such a hydrolytic treatment. The temperature may be higher than 100˚C, but the treatment is preferably carried out normally at a temperature of 100˚C or lower, because there are cases where a pressure-withstanding facility is needed and where the treatment is hardly controllable because of excessively high speed. The hydrolytic treatment condition may be adjusted as needed according to the desired expansion ratio, compression strength, and others of the flower arrangement holder. A trace amount of an alkali component may be added to the resin and the resin may be subjected to hydrolytic treatment by the alkali vapor for shortening the treatment period.

Alternatively, the aliphatic polyester resin expansion molding can be hydrolyzed in a short period of time, as an alkali vapor, an alkali component or the like is added into the process of producing aliphatic polyester resin particles, expandable aliphatic polyester resin particles, or an aliphatic polyester resin expansion molding.

The hydrolytic treatment period is preferably 3 hours or more and 72 hours or less, more preferably 3 hours or more and 48 hours or less. The treatment period above is preferable, because it is possible to obtain a homogeneous aliphatic polyester resin foam having a desired compressive stress.

The foam is preferably pressurized additionally after the hydrolytic treatment. It tends to be possible by pressurization to further decrease the strength of the aliphatic polyester resin foam and make it easier to insert flower stems.

The pressurization method is not particularly limited, if the most fragile regions of the cell barrier are destructed and thick regions are left, but it is preferable to pressurize the foam by using an inorganic gas such as air, nitrogen, or carbon dioxide. Specifically, it is possible to destroy the foam cells, by impregnating the foam with gas sufficiently, as the pressure and the period are adjusted properly, and then releasing the pressure for example at once, or even by applying high pressure without sufficient impregnation with the gas. Gases other than inorganic gases may also be used, but air and nitrogen are favorable, from the viewpoints of economy and environmental impact.

The pressurization pressure is preferably 0.1 MPa or more and 20 MPa or less. A pressure of less than 0.1 MPa may lead to insufficient destruction of the cell barrier, while a pressure of more than 20 MPa to excessive progress of the destruction of the cell barrier. It is also preferable to raise the pressure stepwise, in the case when the cell barrier is destructed by keeping the internal pressure of the foam in the pressurized state and then releasing the pressure.

Also in a favorable embodiment, the pressurization is made in the presence of water or an aqueous solution. For example when the foam should be transported as it contains a nutrient solution, it is preferable to pressurize the foam with a nutrient solution, because it is possible to impregnate the nutrient solution therein and destruct the cell at the same time.

The weight-average molecular weight of the first flower arrangement holder according to the present invention is preferably 5000 or more and 140000 or less, more preferably 60000 or more and 140000 or less. When the molecular weight is in the range above, the flower arrangement holder tends to have an expansion ratio of 10 or more and 60 or less and to retain a desired 10% compressive stress and a desired compression modulus even after hydrolytic treatment and pressurization.

In the present invention, if the expandable particles or the expanded particles have a weight-average molecular weight of 5000 or more and 140000 or less, it is not possible to obtain sufficient melt tension during preliminary foaming or in-mold foaming, possibly prohibiting production of expandable particles favorable in moldability and an expansion molding favorable in appearance. Thus, the aliphatic polyester resin foam according to the present invention is preferably produced by preparing expanded aliphatic polyester resin particles from an aliphatic polyester resin, preparing an aliphatic polyester resin expansion molding by in-mold foaming of the expanded aliphatic polyester resin particles, and then, adjusting the weight-average molecular weight thereof by treatment in the atmosphere at a particular temperature and a particular humidity.

A second embodiment of the flower arrangement holder according to the present invention is an aliphatic polyester resin expansion molding prepared by extrusion foaming of an aliphatic polyester resin, having a 10% compressive stress of 0.02 MPa or more and 0.15 MPa or less and a compression modulus of 0.48 MPa or more and 1.20 MPa or less.

The 10% compressive stress of the second flower arrangement holder according to the present invention is 0.02 MPa or more and 0.15 MPa or less, preferably 0.03 MPa or more and 0.10 MPa or less. A 10% compressive stress of less than 0.02 MPa results in easy insertion, but difficult fixation of flower stem. Alternatively, a 10% compressive stress of more than 0.15 MPa results in easy fixation, but difficult insertion of flower stem.

The compression modulus of the second flower arrangement holder according to the present invention is 0.48 MPa or more and 1.20 MPa or less, preferably 0.50 MPa or more and 1.0 MPa or less. A compression modulus of less than 0.48 MPa leads to easy insertion, but difficult fixation of flower stem. Alternatively, a compression modulus of more than 1.20 MPa results in easy fixation, bur difficult insertion of flower stem.

Hereinafter, the method of producing the second flower arrangement holder according to the present invention will be described.

First, an aliphatic polyester resin compound may be prepared according to any common method, but is prepared, for example, in the following manner: The aliphatic polyester resin used as base resin and the additives other than the crosslinking and foaming agents, which are added as needed, may be mixed in advance and pelletized or may be compounded in and extruded out of an extruder during extrusion foaming.

In the present invention, a colorant, a foam-adjusting agent, and various additives may be added to the aliphatic polyester resin, as needed. The colorant, the foam-adjusting agent, and the various additives that can be used are those similar in kind and amount to those described above used for production of expanded aliphatic polyester resin particles.

Subsequently, an aliphatic polyester resin expansion molding is obtained, by heating the compound in an extruder into the molten state and extruding the compound with a foaming agent injected in the extrusion process. Examples of the extruder used then include single-screw extruders, twin-screw extruders, and tandem extruders consisting of two extruding apparatuses, but, when fine adjustment of foaming condition and production cost are taken into consideration, use of a tandem extruder is preferable, and it is common to use a method of melt-compounding desired components sufficiently and adding a foaming agent thereto in the first-stage extruder of the tandem extruder and foaming the mixture by cooling it to the extrusion temperature in the second-stage extruder.

The foaming agent used in the present invention is not particularly limited, and examples thereof include the foaming agents used in production of the expanded aliphatic polyester resin particles described above. The amount of the foaming agent impregnated can be adjusted according to the kind of the foaming agent and the desired expansion ratio, but for example when an aliphatic polyester resin expansion molding having an expansion ratio of 20 or more is desirably produced, it is preferably 4 wt parts or more and 40 wt parts or less, with respect to 100 wt parts of the base resin. An impregnation amount of less than 4 wt parts may prohibit the desired high-expansion ratio, while an impregnation amount of more than 40 wt parts may lead to excessive decrease of the melt viscosity during extrusion, making it difficult to produce an aliphatic polyester resin expansion molding by extrusion foaming.

Hereinafter, an example of the use of tandem extruder will be described. Important are the injection pressure and temperature of the foaming agent, the amount of the foaming agent introduced, and the temperature and pressure of the region close to the die during extrusion foaming, and these factors are also important when a single- or twin-screw extruder is used. The tandem extruder may be the combination of uniaxial × uniaxial or biaxial × uniaxial. The configuration is preferably determined, while the miscibility of the additives is taken into consideration, and a combination of uniaxial × uniaxial is often chosen from the point of facility cost, if there is no problem in miscibility. The first-stage barrel temperature of the tandem extruder is not particularly limited, if it is a temperature allowing sufficient compounding of the needed components at a temperature allowing sufficient fusion of the lactate acid resin used, and a temperature of 250˚C or lower, at which no thermal degradation of the aliphatic polyester resin occurs, is preferable, and, when the load applied to the extruder and the second-stage cooling efficiency are considered, it is preferable to set the temperature in the range of from the melting point of the aliphatic polyester resin normally used to the melting point of the aliphatic polyester resin + 50˚C.

The barrel temperature of the second-stage extruder is preferably set in such a manner that the compound discharged from the first-stage extruder is cooled sufficiently to the desired temperature before it reaches the die of the second-stage outlet. Excessively high resin temperature during foaming may lead to excessively low resin expansion viscosity and destruction of bubbles by the expansion pressure due to the foaming agent, while excessively low resin temperature may lead to excessive increase in torque, making stabilized production difficult, and thus, the barrel temperature setting is preferably 100˚C to 120˚C, more preferably 100˚C or higher and 110˚C or lower, for production of a thick aliphatic polyester resin expansion molding, which is cooled less easily. In this way, aliphatic polyester resin expansion molding can be produced by extrusion foaming of an aliphatic polyester resin.

The aliphatic polyester resin expansion molding thus obtained may be used, as it is, as a flower arrangement holder, but it is preferably subjected to hydrolytic treatment, more preferably to hydrolytic treatment and then pressurization, additionally.

The hydrolytic treatment tends to lead to embrittlement of the aliphatic polyester resin expansion molding. The hydrolytic treatment can be carried out under a condition similar to that used in the hydrolytic treatment of the aliphatic polyester resin expansion molding in the method of producing the first flower arrangement holder according to the present invention.

In the present invention, the aliphatic polyester resin expansion molding is preferably pressurized for destruction of the cell barrier, after the hydrolytic treatment of the aliphatic polyester resin expansion molding. The pressurization treatment can be carried out under a condition similar to that used in preparation of the first flower arrangement holder.

The expansion ratio of the flower arrangement holder according to the present invention thus obtained is preferably 10 or more and 60 or less, more preferably 10 or more and 40 or less. The closed-cell rate thereof is preferably 0% or more and 50% or less, more preferably 0% or more and 20% or less. When the expansion ratio and the closed-cell rate are in the ranges above, it is easy to adjust the 10% compressive stress, the compression modulus, the ratio of 10% compressive stresses, as determined at any directions perpendicular to each other, and the compression modulus ratio, as determined at any directions perpendicular to each other, of the flower arrangement holder in particular ranges.

The expansion ratio was calculated from volume, weight, and resin density. Specifically, the volume V (cm$^3$) of a sample, which is cut into a rectangular shape with suitable size, is calculated from the external dimensions. The expansion ratio of the flower arrangement holder was calculated from the sample weight W (g), sample volume V (cm$^3$), and resin density 6 (g/cm$^3$) according to the following Formula.

$$\text{Expansion ratio} = V \,/\, (W/\rho)$$

When the expansion ratio of the flower arrangement holder is 10 or more and 60 or less, the weight-average molecular weight of the flower arrangement holder is preferably 5000 or more and 140000 or less, more preferably 10000 or more and 140000 or less, to make the 10% compressive stress and the compression modulus of the flower arrangement holder easily adjusted in the ranges according to the present invention.

In a favorable embodiment, the components used together with the flower arrangement holder according to the present invention, such as injection-molded part as plate for support of the holder, bouquet-holding part, ribbon, packaging sheet, and others, are made of biodegradable resins.

EXAMPLES

Hereinafter, the present invention will be described in detail with reference to Examples, but it should be understood that the present invention is not restricted by these Examples. Evaluations were made by the following methods. The "part" and "%" in each Example are those by weight, unless stated otherwise.

<Evaluation methods>

(1) Impregnation rate of foaming agent in expandable particles

The impregnation rate can be calculated from the weights of the resin particles before and after impregnation according to the following Formula:

$$\text{Impregnation rate (\%)} = 100 \times (\text{Resin particle weight after impregnation} -$$
$$\text{Resin particle weight before impregnation}) \,/\, \text{Resin particle weight before}$$
$$\text{impregnation}$$

(2) Method of measuring the expansion ratio of expanded particles

In the case of polystyrol foams, the expansion ratio is calculated simply by dividing the volume of a certain volume of expanded particles by the weight, because the density of polystyrol is about 1 g/cm$^3$. The expansion ratio of the expanded aliphatic polyester resin particles according to the present invention is also determined in a similar manner, but the expansion ratio is calculated by multiplying it by the density of the base resin. For example when a polylactic acid resin is used as the base resin, because the density of the polylactic acid resin is 1.25 g/cm$^3$, the expansion ratio is obtained by multiplying, by 1.25, the value obtained by dividing the volume of a certain volume of expanded particles by the weight.

Specifically, expanded particles are filled in a polyethylene cup having an internal capacity of 2000 cm$^3$ to the neck, and the weight of the cup is determined. The weight of the expanded particles is calculated by subtracting the cup weight from the weight. The expansion ratio is calculated from the weight of expanded particles and the apparent volume (2000 cm$^3$) according to the following Formula:

$$\text{Expansion ratio} = \text{Apparent volume (2000 cm}^3\text{)} / \text{Weight of expanded particles}$$
$$\text{(g)} \times \text{Density of base resin (g/cm}^3\text{)}$$

(3) Method of determining expansion ratio

The volume (V (cm$^3$)) of an aliphatic polyester resin expansion molding cut into a rectangular shape with a suitable size, which was previously left under the condition of a relative humidity of 50%, 23°C and 1 atm for 7 days, was calculated from its external diameter. The expansion ratio of the expansion molding is calculated from the weight W (g) and the volume V (cm$^3$) of the expansion molding and the resin density p(g/cm$^3$) according to the following Formula:
$$\text{Expansion ratio} = \text{V} / (\text{W}/\rho)$$

(4) Determination of the weight-average molecular weight of aliphatic polyester resin expansion molding

An aliphatic polyester resin expansion molding was cut into a test piece of approximately 30 ml in volume; the test piece was heated with chloroform in a hot water bath at 40°C for 2.5 hours; the soluble matter was filtered through a disposable PTFE filter having a pore diameter of 0.45 $\mu$m and part of the filtrate was used in GPC measurement in chloroform system. The GPC measurement apparatus used was a RI monitor (L-3300) manufactured by Hitachi, Ltd.; the columns used were one K-G column and two K-806L columns manufactured by Showa Denko K.K.; and the weight-average molecular weight was determined under the condition of a sample concentration of 3 mg/ml, an eluant flow rate of 1.0 ml/minute, an injection amount of 100 $\mu$L, and an analytic period of 30 minutes; and the standard samples used were standard polystyrols.

(5) Determination of 10% compressive stress

The stress applied to each of the aliphatic polyester resin expansion moldings obtained in Examples and Comparative Examples when it is compressed by 10% in the compression direction was determined at an arbitrary position according to the method specified in JIS K7220. The sample used had a dimension of 50 mm$\times$50 mm$\times$25 mm (length$\times$width$\times$ thickness); the compressive stress analyzer used was a tensile compression tester TG-20kN manufactured by Minebea Co., Ltd.; and the measurement was made at a compression velocity of 10 mm/minute. In the case of the samples obtained in Examples 7 to 21 and Comparative Examples 5 to 6, a separate sample processed under the same condition was used, and similar measurement was made, while the face thereof perpendicular to the face of the sample described above was used as the top face. When the ratio of the 10% compressive stresses determined in directions perpendicular to each other is 0.9 or more and 1.1 or less, it is indicated by O, and, if not, it is indicated by $\times$.

(6) Determination of closed-cell rate

The closed-cell rate was determined as an indicator of water permeability. Measurement was made by using a multi-pycnometer (manufactured by Beckmann Japan Co., Ltd.) according to the method specified in ASTM D-2856.

(7) Method of determining weight-average molecular weight

Each of the samples obtained in Examples and Comparative Examples was cut into a test piece of approximately 30 ml; the test piece was heated with chloroform in an hot water bath at 40°C for 2.5 hours; the soluble matter was filtered through a disposable PTFE filter having a pore diameter of 0.45 $\mu$m; and part of the filtrate was supplied to GPC measurement in chloroform system. The GPC measurement apparatus used was a RI monitor (L-3300) manufactured by Hitachi, Ltd.; the columns used were one K-G column and two K-806L columns, manufactured by Showa Denko K.K.; and the weight-average molecular weight was determined at a sample concentration of 3 mg/ml, an eluant flow rate of 1.0 ml/minute, an injection amount of 100 $\mu$L, and an analytic period of 30 minute; and the standard samples used were standard polystyrols.

(8) Method of determining compression modulus

Each of the foams obtained in Examples 7 to 22 and Comparative Examples 5 to 7 was analyzed in a test machine similar to that used in compressive stress measurement, and the compression modulus was determined from the slope of the tangent line of the early-stage peak in the compressive stress-strain curve obtained by the measurement. In the case of the samples obtained in Examples 7 to 21 and Comparative Examples 5 to 6, a separate sample processed under the same condition was used, and similar measurement was made, while the face thereof perpendicular to the face of the sample described above was used as the top face. When the compression modulus ratio, as determined on perpendicular faces, is 0.9 or more and 1.1 or less, it is indicated by ○, and, if not, it is indicated by ×.

(9) Method of determining water absorption

A flower arrangement holder was cut into a test piece of 50 mm ×50 mm ×25 mm; the test piece was immersed in a beaker containing purified water previously added; the weights and the volumes before and after immersion were determined; and the water absorption was calculated according to the following Formula:

$$\text{Water absorption (g/mm}^3) = ((\text{Weight after immersion}) - (\text{Weight before immersion}))/ (\text{Volume before immersion}).$$

○: 0.10 g/cm$^3$ or more
× : Less than 0.10 g/cm$^3$

(Example 1)

100 wt parts of a polylactic acid resin having a D-isomer ratio of 10% and a MI of 3.7 g/10 minute and 2.0 wt parts of a polyisocyanate compound (MR-200, manufactured by Nippon Polyurethane Industry Co., Ltd.) were melt-kneaded in a twin-screw extruder (TEM35B, manufactured by Toshiba Machine Co., Ltd.) at a cylinder temperature of 185˚C and extruded into water and cut with a underwater cutter into polylactic acid resin particles having a weight of approximately 1.5 mg/particle.

100 wt parts of water, 12 wt parts of a foaming agent deodorized butane (n-butane/isobutane weight ratio: 7/3), 10 wt parts of sodium chloride, and 0.3 wt part of a dispersion aid polyoxyethylene oleylether were added to 100 wt parts of the polylactic acid resin particles obtained in an autoclave, and the mixture was kept at 84˚C for 90 minutes. The mixture was withdrawn after sufficient cooling and dried, to give expandable polylactic acid resin particles. The foaming-agent impregnation rate in the polylactate-based expandable particles obtained was 5.5%.

Approximately 1.5 kg of the expandable polylactic acid resin particles obtained were placed in a preliminary foaming machine (BHP-300, manufactured by Daisen Industrial Co., Ltd.) and kept under steam at 90˚C for 40 to 60 seconds, to give expanded polylactic acid resin particles. The expanded polylactic acid resin particles obtained were dried in air and fused particles were removed with a screen. The expanded polylactic acid resin particles after separation had an expansion ratio of 40.

A mold of 300×450×20 mm in dimension was connected to the foam-molding machine (KR-57, manufactured by Daisen Industrial Co., Ltd.) and the expanded particles obtained above were filled at a compressibility of 0% and treated under a steam pressure of 0.1 MPa(G) for 10 to 20 seconds for in-mold foaming, to give a polylactic acid resin expansion molding.

The expansion moldings obtained were processed at 80˚C and a relative humidity of 100% for 3 hours, to give polylactic acid resin foams different in 10% compressive stress and weight-average molecular weight. Results are summarized in Table 1.

[Table 1]

| | Example 1 | Example 2 | Example 3 | Example 4 | Example 5 | Example 6 | Comparative Example 1 | Reference Example 1 | Reference Example 2 | Reference Example 3 | Reference Example 4 | Reference Example 5 |
|---|---|---|---|---|---|---|---|---|---|---|---|---|
| Base resin | Polylactic acid | | | | | | | PS | | | | |
| Treatment period | 3hr | 3hr | 6hr | 12hr | 24hr | 48 hr | 0hr | - | - | - | - | - |
| Expansion ratio of expansion molding | 40 | 25 | 25 | 25 | 25 | 25 | 25 | 50 | 60 | 70 | 80 | 100 |
| 10% Compressive stress (MPa) | 0.09 | 0.14 | 0.1 | 0.06 | 0.04 | 0.03 | 0.27 | 0.165 | 0.14 | 0.11 | 0.09 | 0.08 |
| Weight-average molecular weight ($\times 10^4$) | 14.00 | 14.00 | 11.00 | 8.00 | 6.00 | 0.84 | 17.00 | - | - | - | - | - |
| Molecular weight distribution | 2 | 2 | 2 | 2 | 2.3 | 3.2 | 2.5 | - | - | - | - | - |

EP 2 267 066 A1

The compressive stress was determined according to JIS K7220.

(Examples 2 to 6)

Expansion moldings were prepared in a manner similar to Example 1, except that the expansion ratio of the polylactic acid resin expansion molding was adjusted to 25.

The expansion moldings obtained were processed at 80°C and a relative humidity of 100% respectively for 3 hours (Example 2), for 6 hours (Example 3), for 12 hours (Example 4), for 24 hours (Example 5) and for 48 hours (Example 6), to give polylactic acid resin foams different in 10% compressive stress and weight-average molecular weight. Results are summarized in Table 1.

(Comparative Example 1)

An expansion molding was prepared by the method identical with that in Examples 2 to 6, except that the expansion molding was not processed at the particular temperature and humidity. The compressive stress thereof determined was identical with the compressive stress of the polystyrol foam having the same expansion ratio.

(Comparative Example 2)

An expansion molding was prepared by the method identical with that of Example 1, except that the amount of the crosslinking agent polyisocyanate compound was reduced to 1% for increase of resin elongation efficiency, for the purpose of reducing stress by improvement of expansion ratio. However, the particles adhered to each other significantly during gas impregnation and there were blocking and destruction of the foam during foaming, prohibiting production of a favorable expansion molding, although its apparent expansion ratio was increased.

(Comparative Example 3)

For the purpose of reducing the stress by increase of expansion ratio, the expanded particles obtained in an Example were aged and then foamed in two steps to an expansion ratio of 50, but there was drastic shrinkage observed during molding, prohibiting production of a desired expansion molding.

(Reference Example)

The 10% compressive stress of a common polystyrol foam having an expansion ratio of 50 to 100 ("Kanepearl NSG", manufactured by Kaneka Corporation) was determined.

(Example 7)

100 wt parts of polylactic acid having a D-isomer ratio of 10% and a MI value of 3.7 g/10 minute and 2.0 wt parts of a polyisocyanate compound (MR-200, manufactured by Nippon Polyurethane Industry Co., Ltd.) were melt-kneaded in a twin-screw extruder (TEM35B, manufactured by Toshiba Machine Co., Ltd.) at a cylinder temperature of 185°C, extruded into water and cut with an underwater cutter, to give polylactic acid resin particles having a weight of approximately 1.5 mg/particle.

100 wt parts of water, 12 wt parts of a foaming agent deodorized butane (n-butane/isobutane weight ratio: 7/3), 10 wt parts of sodium chloride, and 0.3 wt part of a dispersion aid polyoxyethylene oleylether were added to 100 wt parts of the obtained polylactic acid resin particles in an autoclave and the mixture was kept at 84°C for 90 minutes. The mixture was withdrawn after sufficient cooling and dried, to give expandable polylactic acid resin particles. The foaming agent impregnation rate the expandable polylactic acid resin particles obtained was 5.5%.

Approximately 1.5 kg of the expandable polylactic acid resin particles obtained were placed in a preliminary foaming machine (BHP-300, manufactured by Daisen Industrial Co., Ltd.) and kept under steam at 90°C for 40 to 60 seconds, to give expanded polylactic acid resin particles. The expanded polylactic acid resin particles obtained were dried in air and fused particles were removed by using a screen. The expanded polylactic acid resin particles thus screened had an expansion ratio of 40.

A mold of 300×450×20 mm in dimension was connected to the foam-molding machine (KR-57, manufactured by Daisen Industrial Co., Ltd.) and the expanded particles obtained above were filled at a compressibility of 0% and treated under a steam pressure of 0.1 MPa(G) for 10 to 20 seconds for in-mold foaming, to give a polylactic acid resin expansion molding.

The expansion molding obtained had an expansion ratio of 40, a closed-cell rate of 81% and a 10% compressive stress of 0.21 MPa. Hydrolytic treatment of the expansion molding at 80°C and a relative humidity of 100% for 6 hours gave a desired rigid flower arrangement holder higher in brittleness that is favorable for fixing flower stems.

(Example 8)

A desired flower arrangement holder was obtained by a method similar to Example 7, except that the foam was additionally pressed at 0.3 MPa for 4 hours by nitrogen pressurization, in Example 7.

(Example 9)

A desired flower arrangement holder was obtained by a method similar to Example 7, except that the foam was additionally pressed at 0.3 MPa for 6 hours by nitrogen pressurization, in Example 7.

(Example 10)

A desired flower arrangement holder was obtained by a method similar to Example 7, except that the hydrolytic treatment condition in Example 7 was changed to 80°C and a relative humidity of 100% for 12 hours.

(Example 11)

A desired flower arrangement holder was obtained by a method similar to Example 7, except that the hydrolytic treatment condition in Example 7 was changed to 80°C and a relative humidity of 100% for 12 hours and additionally, the foam was pressed at 0.3 MPa for 4 hours by nitrogen pressurization.

(Example 12)

A desired flower arrangement holder was obtained by a method similar to Example 7, except that the hydrolytic treatment condition in Example 7 was changed to 80°C and a relative humidity of 100% for 12 hours and additionally, the foam was pressed at 0.3 MPa for 6 hours by nitrogen pressurization.

(Example 13)

A desired flower arrangement holder was obtained by a method similar to Example 7, except that the hydrolytic treatment condition in Example 7 was changed to 80°C and a relative humidity of 100% for 18 hours.

(Example 14)

A desired flower arrangement holder was obtained by a method similar to Example 7, except that the hydrolytic treatment condition in Example 7 was changed to 80°C and a relative humidity of 100% for 18 hours and additionally, the foam was pressed at 0.3 MPa for 4 hours by nitrogen pressurization.

(Example 15)

A desired flower arrangement holder was obtained by a method similar to Example 7, except that the hydrolytic treatment condition in Example 7 was changed to 80°C and a relative humidity of 100% for 18 hours and additionally, the foam was pressed at 0.3 MPa for 6 hours by nitrogen pressurization.

(Example 16)

A desired flower arrangement holder was obtained by a method similar to Example 7, except that the hydrolytic treatment condition in Example 7 was changed to 80°C and a relative humidity of 100% for 24 hours.

(Example 17)

A desired flower arrangement holder was obtained by a method similar to Example 7, except that the hydrolytic treatment condition in Example 7 was changed to 80°C and a relative humidity of 100% for 24 hours and additionally, the foam was pressed at 0.3 MPa for 4 hours by nitrogen pressurization.

(Example 18)

A desired flower arrangement holder was obtained by a method similar to Example 7, except that the hydrolytic treatment condition in Example 7 was changed to 80˚C and a relative humidity of 100% for 24 hours and additionally, the foam was pressed at 0.3 MPa for 6 hours by nitrogen pressurization.

(Example 19)

A desired flower arrangement holder was obtained by a method similar to Example 7, except that the hydrolytic treatment condition in Example 7 was changed to 80˚C and a relative humidity of 100% for 48 hours.

(Example 20)

A desired flower arrangement holder was obtained by a method similar to Example 7, except that the hydrolytic treatment condition in Example 7 was changed to 80˚C and a relative humidity of 100% for 48 hours and additionally, the foam was pressed at 0.3 MPa for 4 hours by nitrogen pressurization.

(Example 21)

A desired flower arrangement holder was obtained by a method similar to Example 7, except that the hydrolytic treatment condition in Example 7 was changed to 80˚C and a relative humidity of 100% for 48 hours and additionally, the foam was pressed at 0.3 MPa for 6 hours by nitrogen pressurization.

(Comparative Example 4)

A polylactic acid resin expansion molding was obtained by a method similar to Example 7, except that the hydrolytic treatment and the pressurization were eliminated. The expansion molding was completely resistant to insertion of flower stem and thus, unfavorable as a flower arrangement holder.

(Comparative Example 5)

A polylactic acid resin expansion molding was obtained by a method similar to Example 9, except that the hydrolytic treatment was eliminated. The expansion molding was completely resistant to insertion of flower stem and thus, unfavorable as a flower arrangement holder.

[Table 2]

| | | Example 7 | Example 8 | Example 9 | Example 10 | Example 11 | Example 12 | Example 13 | Example 14 | Example 15 | Example 16 | Example 17 | Example 18 | Example 19 | Example 20 | Example 21 | Comparative Example 4 | Comparative Example 5 |
|---|---|---|---|---|---|---|---|---|---|---|---|---|---|---|---|---|---|---|
| Base resin | | Polylactic acid | | | | | | | | | | | | | | | Polylactic acid | |
| Hydrolytic treatment condition | Temperature (°C) | 80 | 80 | 80 | 80 | 80 | 80 | 80 | 80 | 80 | 80 | 80 | 80 | 80 | 80 | 80 | - | - |
| | Humidity (%) | 100 | 100 | 100 | 100 | 100 | 100 | 100 | 100 | 100 | 100 | 100 | 100 | 100 | 100 | 100 | - | - |
| | Period (hr) | 6 | 6 | 6 | 12 | 12 | 12 | 18 | 18 | 18 | 24 | 24 | 24 | 48 | 48 | 48 | 0 | - |
| Pressurization condition | Pressurization gas | - | N₂ | N₂ | - | N₂ | N₂ | - | N₂ | N₂ | - | N₂ | N₂ | - | N₂ | N₂ | - | N₂ |
| | Pressure (MPa) | - | 0.3 | 0.3 | - | 0.3 | 0.3 | - | 0.3 | 0.3 | - | 0.3 | 0.3 | - | 0.3 | 0.3 | - | 0.3 |
| | Period (hr) | 0 | 4 | 6 | 0 | 4 | 6 | 0 | 4 | 6 | 0 | 4 | 6 | 0 | 4 | 6 | 0 | 6 |
| Expansion ratio | | 40 | | | | | | | | | | | | | | | 40 | |
| Closed-cell rate (%) | | 48 | 31 | 20 | 36 | 3 | 2 | 24 | 5 | 2 | 9 | 3 | 3 | 5 | 3 | 5 | 81 | 80 |
| 10% Compressive stress <MPa> | | 0.1 | 0.08 | 0.06 | 0.1 | 0.03 | 0.03 | 0.06 | 0.05 | 0.04 | 0.05 | 0.03 | 0.03 | 0.025 | 0.02 | 0.02 | 0.21 | 0.2 |
| 10% Compressive stress ratio, as determined in directions perpendicular to each other | | ○ | ○ | ○ | ○ | ○ | ○ | ○ | ○ | ○ | ○ | ○ | ○ | ○ | ○ | ○ | ○ | ○ |
| Compression modulus | | 1.59 | 1.52 | 1.44 | 1.31 | 1.25 | 1.18 | 0.93 | 0.85 | 0.78 | 0.62 | 0.55 | 0.48 | 0.53 | 0.48 | 0.53 | 3.66 | 3.65 |
| Compression modulus ratio, as determined in directions perpendicular to each other | | ○ | ○ | ○ | ○ | ○ | ○ | ○ | ○ | ○ | ○ | ○ | ○ | ○ | ○ | ○ | ○ | ○ |
| Weight-average molecular weight (×10⁴) | | 11.0 | 11.0 | 11.0 | 8.0 | 8.0 | 8.0 | 7.0 | 7.0 | 7.0 | 6.0 | 6.0 | 6.0 | 0.8 | 0.8 | 0.8 | 17.0 | 17.0 |
| Water absorption | | ○ | ○ | ○ | ○ | ○ | ○ | ○ | ○ | ○ | ○ | ○ | ○ | ○ | ○ | ○ | × | × |

Comparison of the water absorptions of the samples obtained in Examples 7 to 21 and Comparative Examples 4 to 5 showed that the samples of Examples 7 to 21 absorbed water by capillary phenomenon, but those of Comparative Examples 4 to 5 absorbed water only in a trace amount after 24 hours.

(Preparative Example 1)

Preparation of aliphatic polyester resin expansion molding by extrusion foaming

A polylactic acid (abbreviation: PLA) was used as the aliphatic polyester resin. PLA: a polylactic acid resin (D-isomer ratio: 10 mol %, glass transition temperature (Tg): 51˚C, melting point (Tm): 118˚C, weight-average molecular weight (Mw): 150,000), D-isomer ratio: Molar fraction of D-isomer component in PLA (mol %).

The PLA composition shown in Table 3 was foamed in a MCF extrusion molding system manufactured by Kawata Mfg. Co., Ltd. (φ35 mm/φ50 mm tandem extruder and SCF metering feeder: carbon dioxide feeder) under the condition of a resin feed rate of 13.4 kg/hr, a resin temperature of 180˚C, a carbon dioxide-feeding rate of 0.8 kg/hr, a $CO_2$-feeding pressure of 16.2 MPa, a die temperature of 118˚C, and a die pressure of 11 MPa. As shown in Table 3, the extruded foam thus obtained was a highly expanded foam having an expansion ratio of 42.

(Example 22)

The aliphatic polyester resin expansion molding obtained in Preparative Example 1 was hydrolyzed under the condition of an internal temperature of 80˚C and a relative humidity of 95% for 24 hours and additionally pressed at 0.3 MPa for 18 hours by nitrogen pressurization, to give a flower arrangement holder. The flower arrangement holder obtained had the 10% compressive stress and the compression modulus shown in Table 1 and is thus, rigid, higher in brittleness, and favorable for fixation of flower stem.

[Table 3]

| Item | | Unit | Example 22 | Comparative Example 6 |
|---|---|---|---|---|
| Composition | | wt parts | 100 | 100 |
| | Plasticizer 2) | wt parts | 2 | 2 |
| Hydrolytic treatment condition | Temperature | ˚C | 80 | - |
| | Relative humidity | % | 95 | - |
| | Treatment period | hr | 24 | - |
| Pressurization condition | Pressure | MPa | 0.3 | - |
| | Treatment period | hr | 18 | - |
| Properties | Expansion ratio | time | 42 | 40 |
| | 10% compressive stress | MPa | 0.05 | 0.2 |
| | Compression modulus | MPa | 0.62 | 3.66 |
| | Water absorption | $g/cm^3$ | 0.45 | 0.03 |
| 1) Manufactured by NatureWorks LLC, Mw: 150,000 <br> 2) Dibutyl sebacate (DBS) | | | | |

(Comparative Example 6)

An expansion molding for use as flower arrangement holder was obtained by a method similar to Example 22, except that the hydrolytic treatment in a high-temperature high-humidity machine and the pressurization were eliminated. The expansion molding obtained had the 10% compressive stress and the compression modulus shown in Table 3 and was completely resistant to insertion of flower stems and thus, unfavorable as a flower arrangement holder.

Comparison of the water absorptions of the samples obtained in Example 22 and Comparative Example 6 showed that the water absorption in Example 22 was 0.45 $g/cm^3$, while that of Comparative Example 7 after 24 hours was 0.03 $g/cm^3$, indicating that there was almost no water absorption.

## EP 2 267 066 A1

INDUSTRIAL APPLICABILITY

The aliphatic polyester resin foam according to the present invention, which has a low compressive stress equal to that of an expanded polystyrol foam having an expansion ratio of 50 or more and shows easy degradability and excellent shock absorption performance, can be used favorably as a flower arrangement holder for support of plants, which is used for example in flower arrangement by using fresh flowers such as cut flower plants, Western flower arrangement, modern flower art, decoration of flowers for ceremonial occasions and others.

## Claims

1. An aliphatic polyester resin foam, having a weight-average molecular weight of 5000 or more and 140000 or less and an expansion ratio of 10 or more.

2. The aliphatic polyester resin foam according to Claim 1, wherein the aliphatic polyester resin foam is obtained from expanded aliphatic polyester resin particles.

3. The aliphatic polyester resin foam according to Claim 1 or 2, wherein the aliphatic polyester resin is a polylactic acid resin.

4. The aliphatic polyester resin foam according to Claim 3, having a weight-average molecular weight of 10000 or more and 140000 or less and an expansion ratio of 10 or more.

5. The aliphatic polyester resin foam according to any one of Claims 1 to 4, having an expansion ratio of 10 or more and 60 or less.

6. The aliphatic polyester resin foam according to Claim 5, having an expansion ratio of 10 or more and 40 or less.

7. The aliphatic polyester resin foam according to any one of Claims 1 to 6, having a 10% compressive stress of 0.02 MPa or more and 0.15 MPa or less.

8. A method of producing the aliphatic polyester resin foam according to any one of Claims 1 to 7, **characterized in that** the aliphatic polyester resin foam is obtained by treating an aliphatic polyester resin expansion molding in the atmosphere at a temperature of 60˚C or higher and 100˚C or lower and a relative humidity of 60% or more and 100% or less.

9. The method of producing the aliphatic polyester resin foam according to Claim 8, comprising preparing an aliphatic polyester resin expansion molding by in-mold foaming of expanded aliphatic polyester resin particles and treating the aliphatic polyester resin expansion molding in the atmosphere at a temperature of 60˚C or higher and 100˚C or lower and a relative humidity of 60% or more and 100% or less.

10. The method of producing the aliphatic polyester resin foam according to Claim 9, comprising preparing an aliphatic polyester resin expansion molding by in-mold foaming of expanded aliphatic polyester resin particles and treating the aliphatic polyester resin expansion molding in the atmosphere at a temperature of 60˚C or higher and 100˚C or lower and a relative humidity of 80% or more and 100% or less.

11. The method of producing the aliphatic polyester resin foam according to Claim 9 or 10, wherein the treatment is carried out for 3 hours or more and 72 hours or less.

12. The method of producing the aliphatic polyester resin foam according to Claim 11, wherein the treatment is carried out for 3 hours or more and 48 hours or less.

13. A flower arrangement holder, comprising an aliphatic polyester resin expansion molding obtained by in-mold foaming of expanded aliphatic polyester resin particles and having a 10% compressive stress of 0.02 MPa or more and 0.15 MPa or less, a compression modulus of 0.40 MPa or more and 2.00 MPa or less, a 10% compressive stress ratio, as determined on faces perpendicular to each other, of 0.9 or more and 1.1 or less, and a compression modulus ratio, as determined on faces perpendicular to each other, of 0.9 or more and 1.1 or less.

14. A flower arrangement holder, comprising an aliphatic polyester resin expansion molding obtained by extrusion foaming of an aliphatic polyester resin and having a 10% compressive stress of 0.02 MPa or more and 0.15 MPa or less and a compression modulus of 0.48 MPa or more and 1.20 MPa or less.

15. The flower arrangement holder according to Claim 13 or 14, wherein the aliphatic polyester resin is a polylactic acid resin.

16. The flower arrangement holder according to any one of Claims 13 to 15, having a weight-average molecular weight of 5000 or more and 140000 or less, an expansion ratio of 10 or more and 60 or less, and a closed-cell rate of 0% or more and 50% or less.

17. The flower arrangement holder according to Claim 16, having a weight-average molecular weight of 10000 or more and 140000 or less, an expansion ratio of 10 or more and 60 or less, and a closed-cell rate of 0% or more and 50% or less.

18. The flower arrangement holder according to Claim 17, having a weight-average molecular weight of 60000 or more and 140000 or less, an expansion ratio of 10 or more and 40 or less, and a closed-cell rate of 0% or more and 50% or less.

19. A method of producing the flower arrangement holder according to Claim 13 or 15, comprising preparing an aliphatic polyester resin expansion molding by in-mold foaming of expanded aliphatic polyester resin particles and hydrolyzing the aliphatic polyester resin expansion molding.

20. The method of producing the flower arrangement holder according to Claim 19, comprising preparing an aliphatic polyester resin expansion molding by in-mold foaming of expanded aliphatic polyester resin particles, hydrolyzing the aliphatic polyester resin expansion molding, and pressing the aliphatic polyester resin expansion molding.

21. A method of producing the flower arrangement holder according to Claim 14 or 15, comprising hydrolyzing the aliphatic polyester resin expansion molding obtained by extrusion foaming of the aliphatic polyester resin.

22. The method of producing the flower arrangement holder according to Claim 21, comprising hydrolyzing the aliphatic polyester resin expansion molding obtained by extrusion foaming of the aliphatic polyester resin and additionally pressing the resulting aliphatic polyester resin expansion molding.

23. The method of producing the flower arrangement holder according to any one of Claims 19 to 22, wherein the hydrolytic treatment is carried out under the condition of a temperature of 60˚C or higher and 100˚C or lower and a relative humidity of 60% or more.

24. The method of producing the flower arrangement holder according to Claim 20, wherein the pressurization is carried out by using an inorganic gas.

25. The method of producing the flower arrangement holder according to Claim 20, wherein the pressurization is carried out in the presence of water or an aqueous solution.

## INTERNATIONAL SEARCH REPORT

| | International application No. |
|---|---|
| | PCT/JP2009/054735 |

A. CLASSIFICATION OF SUBJECT MATTER
*C08J9/232*(2006.01)i, *A01G5/04*(2006.01)i, *A47G7/03*(2006.01)i, *B29C67/20*(2006.01)i, *C08J9/12*(2006.01)i

According to International Patent Classification (IPC) or to both national classification and IPC

B. FIELDS SEARCHED

Minimum documentation searched (classification system followed by classification symbols)
C08J9/232, A01G5/04, A47G7/03, B29C67/20, C08J9/12

Documentation searched other than minimum documentation to the extent that such documents are included in the fields searched
Jitsuyo Shinan Koho            1922-1996    Jitsuyo Shinan Toroku Koho    1996-2009
Kokai Jitsuyo Shinan Koho      1971-2009    Toroku Jitsuyo Shinan Koho    1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-98105 A  (Kanebo, Ltd.), 10 April, 2001 (10.04.01), Claims; examples; Par. No. [0052] (Family: none) | 1-7 8-12 |
| X | JP 2001-164027 A  (Kanebo, Ltd.), 19 June, 2001 (19.06.01), Claims; examples; Par. No. [0059] (Family: none) | 1-7 8-12 |
| X | WO 99/21915 A1  (Kanebo Gosen, Ltd.), 06 May, 1999 (06.05.99), Page 3, lines 12 to 15; examples & JP 3937727 B          & US 6310171 B1 & EP 1035158 A1 | 1-6 |

☒ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 May, 2009 (29.05.09) | 09 June, 2009 (09.06.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 267 066 A1**

<table>
<tr><td colspan="2" align="center">INTERNATIONAL SEARCH REPORT</td><td>International application No.<br>PCT/JP2009/054735</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2006-111704 A  (Kanebo, Ltd.),<br>27 April, 2006 (27.04.06),<br>Claims; Par. No. [0001]<br>(Family: none) | 1-6 |
| X | JP 2003-253107 A  (Kanebo, Ltd.),<br>10 September, 2003 (10.09.03),<br>Claims; Par. No. [0009]<br>(Family: none) | 1-6 |
| A | JP 2003-301068 A  (Kanebo, Ltd.),<br>21 October, 2003 (21.10.03),<br>Full text<br>(Family: none) | 8-12 |

Form PCT/ISA/210 (continuation of second sheet) (April 2007)

**EP 2 267 066 A1**

| INTERNATIONAL SEARCH REPORT | International application No. |
|---|---|
| | PCT/JP2009/054735 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:

The special technical feature of the inventions of claims 1-12 is "an aliphatic polyester resin foam having a weight-average molecular weight of 5000 to 140000 and an expansion ratio of 10 or more", while the special technical feature of the inventions of claims 13-25 is "a flower arrangement holder which is made of an aliphatic polyester resin foam obtained by expansion-molding an aliphatic polyester resin".

There is no technical relationship among the inventions involving one or more of the same or corresponding special technical features, so that the inventions are not considered as being so linked as to form a single general inventive concept.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:  1-12

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 99021915 A
- JP 2005068306 A
- JP 9075193 A
- JP 8053564 A
- JP 2000333802 A
- JP 2000217683 A